Europäisches Patentamt

European Patent Office

Office européen des brevets

(11) Publication number: **0 297 743**
A2

# (12) EUROPEAN PATENT APPLICATION

(21) Application number: 88305340.7

(22) Date of filing: 10.06.88

(51) Int. Cl.⁴: **A23J 3/00** , **A23P 1/00** , **A22C 7/00**

(30) Priority: 22.06.87 GB 8714541

(43) Date of publication of application:
04.01.89 Bulletin 89/01

(84) Designated Contracting States:
AT BE CH DE ES FR GB GR IT LI LU NL SE

(71) Applicant: IMPERIAL CHEMICAL INDUSTRIES PLC
Imperial Chemical House Millbank
London SW1P 3JF(GB)

Applicant: RANKS HOVIS McDOUGALL PLC
RHM Centre P.O. Box 178 Alma Road
Windsor Berkshire SL4 3ST(GB)

(72) Inventor: Reynolds, Andrew John
10 Mill Hill End
Hilton Huntingdon Cambs(GB)
Inventor: Willer, Paul Hans Frederick
11 Watling Street
Thaxted Essex CM6 2PE(GB)

(74) Representative: Aufflick, James Neil et al
Imperial Chemical Industries PLC Legal
Department: Patents PO Box 6 Bessemer
Road
Welwyn Garden City Herts, AL7 1HD(GB)

(54) Texturising process and apparatus.

(57) An apparatus and method for producing a textured product from a dough-like fibrous material, particularly fungal proteins.

*Fig.1.*

## Texturising process and apparatus

This invention relates to a process and apparatus for producing a fibrous product of improved texture and in particular to a process and apparatus for producing a meat and/or fish product or a simulated meat and/or fish product of improved texture.

In the formation of a product from a fibrous material it is frequently an advantage in terms of the texture of the product to align most of the fibres in the material in the product, rather than to have all the fibres lying randomly.

Many meat and/or fish products or simulated meat and/or fish products are formed from fibrous materials having short fibres. Examples of such products include:-

(a) reformed meat, i.e. a meat product which is produced by converting low grade meat, gristle and the like into a comminute and reforming it; and

(b) simulated meat products formed from hyphal fungi such as the material produced by the process of UK Patent Specification No. 1346062. In such products it is important that the bundles of fibres which they contain are orientated in such a way that the texture resembles meat and/or fish when eaten. Such products are readily acceptable to consumers.

A method of producing a textured appearance and feel to foodstuffs derived from mycelial fungal masses is described in UK Patent 1502455. This method employs two surfaces between which the material to be processed is introduced. The two surfaces can be moved relative to one another such that a rolling and squeezing action is imparted to the material. The apparatus so employed cannot independently alter the relative speed of the surfaces and the squeezing action obtained therefrom. Therefore whilst such a method can process some materials so as to axially orientate groups of hyphae contained therein, it is not able to process other materials.

According to the present invention we provide an apparatus for producing a product from a dough-like fibrous material which comprises;

(a) at least three rollers;

(b) supporting means to support the rollers which are mounted therein essentially horizontally in such a manner that there are at least two upper rollers and at least one lower roller;

(c) rotating means to rotate the rollers in the same direction about their axes;

(d) moving means to move the axes of all or at least the two upper rollers towards and away from each other and thereby to enable material to be supplied to the apparatus from above the upper rollers when the rollers are positioned away from each other and to roll the material and thereby to reduce its cross-sectional area; and

(e) releasing means to enable product to be released from the apparatus.

Further according to the invention we provide a process for producing a product from a dough-like fibrous material which comprises the steps of:-

(i) supplying at least one piece of material of pre-determined size to an apparatus comprising at least three rollers mounted essentially horizontally to include at least two upper and at least one lower rollers;

(ii) rolling the piece of material in the apparatus to achieve a pre-determined reduction in the cross-sectional area of the piece of material; and

(iii) releasing the elongated piece of material from the apparatus as the product.

The process of the invention as typically operated has the following sequence of steps:-

1. The upper rollers are moved outwardly away from each other to create a gap at the top of the apparatus;

2. A piece of material of size suitable for rolling is dropped from above into the gap created by the movement of the upper rollers and rests on the raised lower roller;

3. The upper rollers are moved inwardly whilst the lower roller is lowered until the material is gripped by the rollers;

4. The three rollers are rotated whilst their axes of rotation are brought together until the cross-sectional area of the piece of material has been sufficiently reduced;

5. The upper rollers are moved out and the lower roller turned to release the product which has been produced; and

6. The upper rollers are moved and the lower roller is raised outwardly to enable the cycle to re-commence.

Importantly the apparatus of the invention has means by which both the peripheral velocity of the rollers, and the speed at which the axes of the rollers are brought together, in such a manner that the two actions can be controlled independently. This independent action enables the apparatus to process materials having a wide range of rheological characteristics.

Preferably the rollers are rotated and the upper rollers are moved outwardly and inwardly by electrical or other automatic means. Suitably the electrical means for performing these operations are located at the ends of the apparatus. However manual operation is not excluded and for this the electrical means are replaced by handles at the ends of the apparatus.

The minimum number of rollers in the apparatus of the invention is three. However it is possible to increase the number of rollers if this is desirable in specific situations. For example a fourth roller can be added located above the upper rollers as an uppermost roller. When this is done the added roller should be mounted so that it may be moved upwards out of the path of the piece of material falling into the apparatus. Generally the rotating means and the releasing means are the same and the product is released by operating the rotating means, preferably making approximately a half-turn of the lower roller.

Preferably the rollers are located horizontally in the apparatus and have their axes parallel to each other. Preferably the rollers are cylindrical.

The quality of the product that is produced using the process of the invention is influenced to some extent by the temperature at which it is treated. Thus the treatment of the material preferably takes place within an optimum temperature range for any particular product. By this means the orientation of the fibre bundles is achieved, whilst maintaining the rheology of the material in a desired regime.

Suitable methods for maintaining the processing temperature within the optimum temperature range, where the desired processing temperature is below ambient conditions, include pre-chilling of the material to be processed, and/or chilling of the rollers of the apparatus. The rollers may be provided with an internal cooling water system to enable them to be chilled more readily.

The material product by the process of UK Patent 1346062 and subsequently treated by the process of UK Patent 1408845 when processed using the apparatus of the present invention has an optimum temperature range of between 0 and $+10^\circ$ C, and preferably between $+4$ and $+6^\circ$ C. Other materials with different properties would probably require different optimum temperature ranges. Such optimum temperature ranges are likely to fall within an overall range of between $-5^\circ$ C and ambient temperature e.g. 15 to $20^\circ$ C.

The invention will hereinafter be described in terms of a simple apparatus having three cylindrical rollers positioned horizontally.

It is preferred that the axes of all the rollers are movable. However a system is possible in which the axes of the upper rollers are movable whilst the lower roller has a fixed axis. Any suitable means may be used to move the rollers. Preferably they are moved using a combination of a fixed and a movable plate at each end of the roller system with stub shafts at the ends of the rollers passing through slots in the plates as shown in the drawings. An alternative less preferred moving means for the upper rollers includes yoke-shaped members with the spindle upon which each upper roller rotates passing through the free ends of the 'yoke' which supports it. The 'yokes' can be pivoted outwardly to move the upper rollers away from each other and inwardly to move these rollers towards one another.

Preferably the rotating means causes all the rollers to rotate at the same circumferential speed. In each cycle of the apparatus the rollers may be rotated throughout in our direction. However it is preferred that the rotation is of a reciprocal (reversing) kind operated as in the rolling of dough, rotating for a short period in one direction and then reversing.

In the process of the invention a piece of material supplied to the apparatus becomes elongated and bundles of fibres in it become increasingly axially aligned. When the process of the invention is used to produce meat and/or fish products or simulated meat and/or fish products, we have found that the extent of the increase in length of the piece of material is important in producing products having good meat-like texture. Preferably for good meat-like texture in fungal meat and/or fish analogues the piece of material is rolled until it is at least three times its original length. The minimum desired extensions impart to the material an adequate final texture, in a reasonable processing time. Higher degrees of orientation, and/or extension can be achieved by using a longer apparatus, or by repeated insertion of the material in to the apparatus whilst maintaining the original alignment of the material within the apparatus. Over an 80 times extension can be achieved by using at least 4 passes through a machine capable of giving a once through extension of 3 times. Additionally important for products having good meat-like texture is the duration of the rolling made before changes of direction when rolling is by reciprocal motion. We have found that short periods are preferable to long ones. Preferably rolling is for approximately a complete rotation, i.e. one circumference of the rollers.

In the process of the invention one or more pieces of material may be supplied to the apparatus at the same time. For example three pieces may be supplied at intervals along the length of the rollers. When more than one piece of material is supplied at once to the apparatus rolling should be discontinued before the elongated pieces touch one another.

In the apparatus of the invention, the diameter of the rollers which is preferred depends upon the size of the pieces of material which are to be supplied to the apparatus. In an apparatus which is to be used in the production of meat and/or fish products or simulated meat and/or fish products the diameter of the rollers is preferably within the range 80mm to 100mm since it is preferred that the size of the pieces of material supplied to the apparatus is within the range 0.25 kg to 5 kg. Preferably pieces of material are rolled for periods within the range 30 to 150 seconds depending upon the size of the pieces.

Preferably the process of the invention is operated continuously with pieces of material being supplied to the apparatus and released product being removed from the apparatus repeatedly at a frequency commensurate with the rate of operation of the apparatus. The process of the invention may form a step in a larger process, e.g. in a process for producing hyphal fungi and converting the fungi into a simulated meat product.

When the process of the invention is used to treat hyphal fungi produced by a process such as that of UK Specification No. 1346062 and subsequently treated by a process such as that of UK Specification No. 1408845, it is used to treat the fermentation product after de-watering, i.e. to treat a mycelial fungal mass containing between 20 to 40 % w/w of solids. Flavourings and other ingredients, such as gel forming substances e.g. egg albumin, gluten, and carragheenan, of the simulated meat product of the process are added to the de-watered broth before it is treated by the process of the invention. Treatment by the process of the invention converts the mycelial fungal mass into pieces suitable for conversion into a simulated meat product often referred to as mycoprotein which can be further treated using conventional technology.

In the production of meat and/or fish products or simulated meat and/or fish products, the process of the invention enables bundles of fibres to orientated in a more efficient and controllable manner than is achieved with the process described in UK Patent 1502455. The process of the invention also has other advantages. The apparatus lacks crevices and is easy to clean, an important advantage in a process for the production of a foodstuff. Additionally those parts of the rotating means and the moving means which are most likely to form potential sources of contamination of the final product are readily separated from the rollers for cleaning.

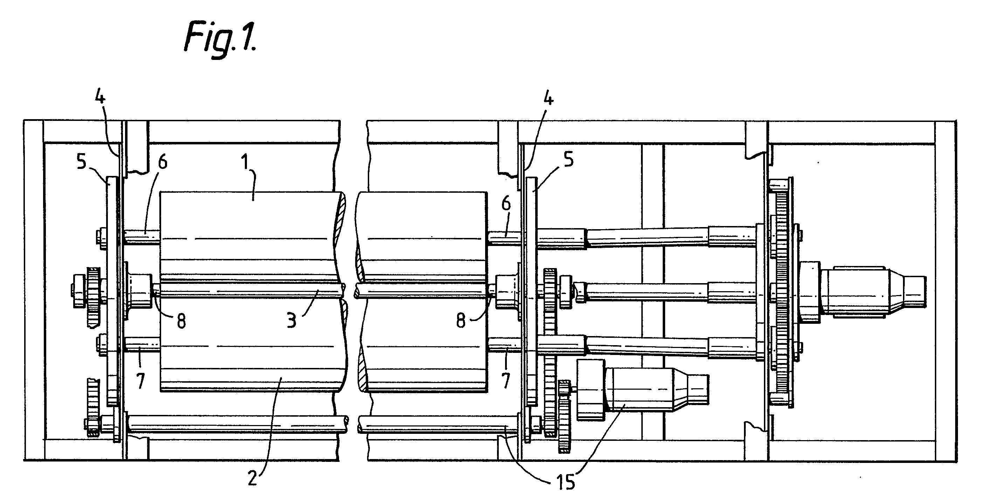

The invention is illustrated by the accompanying drawings and photographs in which Figures 1 and 2 are respectively plan and end views of the preferred form of the apparatus of the invention; Figures 3 and 4 are histograms of the numbers of hyphae in discrete classes as a function of their angular orientation away from the vertical axis for the unrolled and rolled samples respectively in the Example; and photographs 1 and 2 of unrolled and rolled material respectively of the Example.

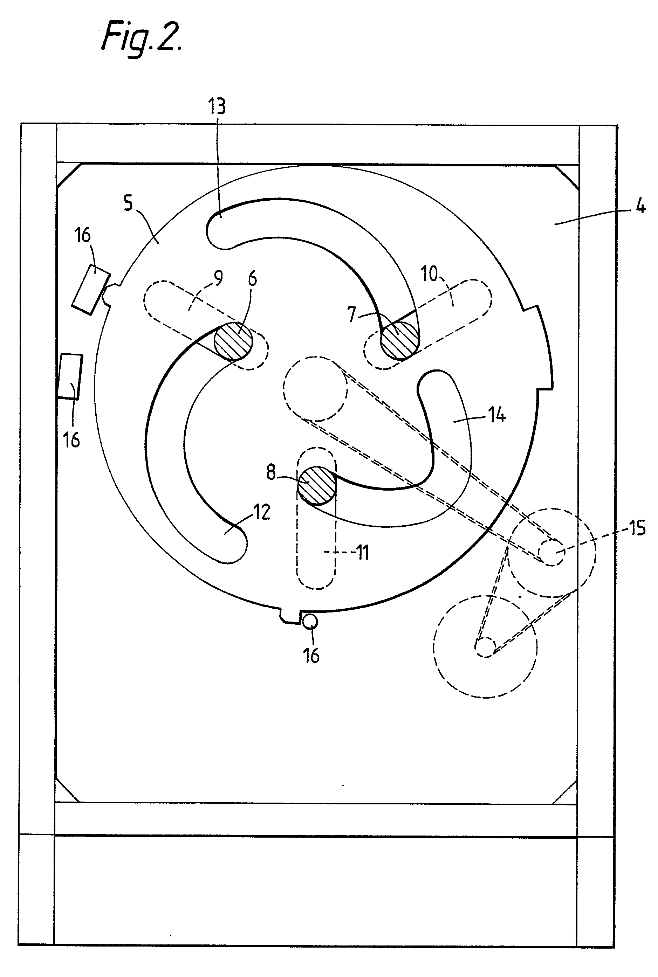

The apparatus comprises upper rollers 1 and 2 and lower roller 3 located horizontally between fixed vertical end plates 4. Movable 'swash' plates 5 are located outside end plates 4. Stub shafts 6, 7 and 8 at the ends of rollers 1, 2 and 3 respectively pass through straight slots 9, 10 and 11 respectively in end plates 4 and arcuate slots 12, 13 and 14 respectively in swash plates 5. Drive mechanism 15 can move both swash plates 5 in synchrony in either direction. The movement of swash plates 5 relative to fixed end plates 4 causes stub shafts 6, 7 and 8 to move along straight slots 9, 10 and 11 respectively thereby moving rollers 1, 2 and 3. When swash plates 5, as shown in Figure 2, move in a clockwise direction, stub shafts 6, 7 and 8 move towards the outer ends of straight slots 9, 10 and 11 respectively and rollers 1, 2 and 3 move apart. Movement of a swash plate 5 in either direction ends when an outer edge of the plate hits one of the limiting devices 16. The shape of arcuate slots 14 in which stub shaft 8 attached to lower roller 3 move is distorted to some extent to prevent workpieces falling through the apparatus.

In operation of the apparatus in the process of the invention one or more pieces of material of suitable size are supplied to the apparatus with lower roller 3 raised and upper rollers 1 and 2 widely separated. A piece of material so supplied then rests on lower roller 3. The pieces of material supplied to the apparatus may not be accurately cylindrical due to uneven extrusion or to distortion during handling. It is convenient if irregular pieces are to be rolled for them to be placed on top of the upper rollers while earlier pieces are being rolled. In this way they can be made made cylindrical before passing into the roller system.

Swash plates 5 are then rotated to cause lower roller 3 to descend and upper rollers 1 and 2 to move inwardly towards one another. As soon as contact is made with a piece of material the rollers begin to rotate. This rotation is initially fairly gentle with little or no inward movement of the rollers until the piece of material has been rotated a few times and has become cylindrical.

Rolling to elongate the piece of material now takes place, with the direction of rotation changing repeatedly every few revolutions, whilst at the same time rotation of the swash plates causes rollers 1, 2 and 3 to move closer together.

When the pre-determined rolling process has been completed, the rollers are slowed to a halt, and then are moved slightly apart. This allows the now elongated piece of material to come to rest on the top of lower roller 3. The rollers are then moved apart to begin a new cycle, and while this is happening, a quarter to a half rotation of the rollers discharges the material from the apparatus.

Suitably the control system on the apparatus is designed to permit the independent variation of every variable in the rolling cycle. This enables the acceleration of the rollers, their steady speed, the duration of each element in the cycle and the wave form of the acceleration/deceleration part of the cycle all to be separately specified. As a result the apparatus can be programmed so as to apply optimal treatment to the feed material depending upon either the properties of the feed or the desired properties of the product and to make optimal use of its potential capacity.

The invention is further illustrated by the following Example in which the apparatus described above was used:-

In this example, a dough comprising a mycelial mass prepared as described in UK Patent No. 1346062, hen egg albumen, added water and flavouring in the proportions 25:3:1:1 was thoroughly mixed in a high shear mixer. It was then extruded through a tube with a circular orifice to give an approximately cylindrical billet of nominal diameter 12.5 centimetres. The billet was wire cut into workpieces having lengths of approximately 40 centimetres.

A work piece approximately (125 mm dia) was placed at the longitudinal centre of the lower roller 3.

On initiation of the rolling programme, the rollers were moved rapidly closer together, over a period of one second, to almost touch the work piece, and then slowly, over a further period of one second, to just touch and slightly squeeze it.

The rollers then rotated with a reciprocating motion, but without moving relative to one another, for a period of twelve seconds, involving three complete reversing cycles, each of amplitude of one revolution.

This action was to centralise the work piece, and produce a regular cylindrical form.

The next stage of the programme, was the texture forming step, when the rollers were rotated with a reciprocating motion, for 24 complete reversing cycles, each of 2.5 seconds (total stage time of 60 seconds). (The angular velocity profile of each cycle was approximately sinusoidal.)

During this time, the rollers closed relative to one another, typically a radial distance of 25 mm, reducing the diameter of the workpiece to 75 mm.

At completion of this step, rotation of the rollers ceased, and they were moved apart during three seconds.

Finally, the rollers rotated through 0.5 revolution, causing the rolled workpiece to fall from the machine.

After release from the machine the work piece was gauged to a maximum depth of approximately 2.5 centimetres and the thermogelling component (hen egg albumen) set by steaming the work piece until its centre temperature has reached 90 degrees centigrade.

Several work pieces were treated in this way and were then examined by scanning electron microscopy, being cut through to give transverse sections, vertical longitudinal sections and horizontal longitudinal sections.

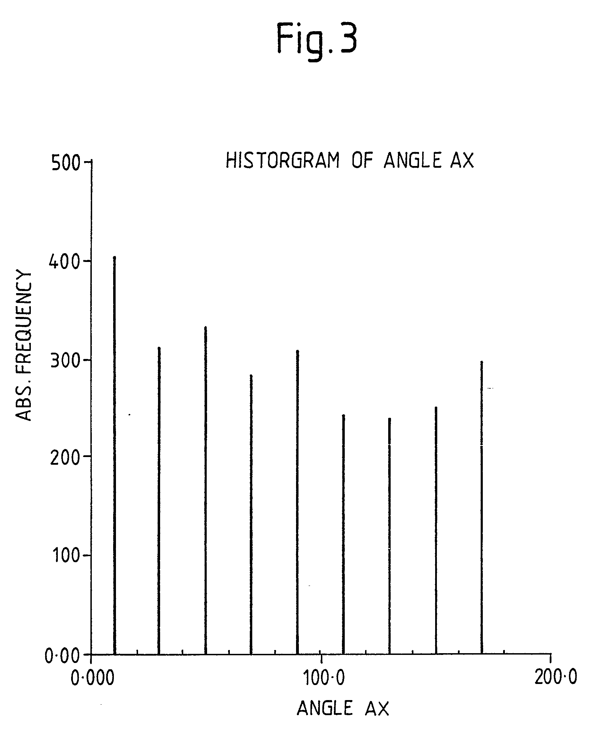

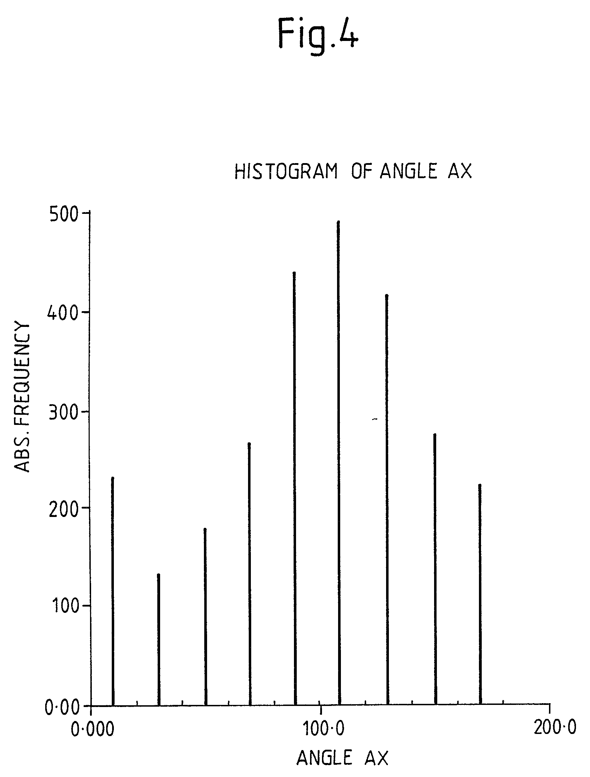

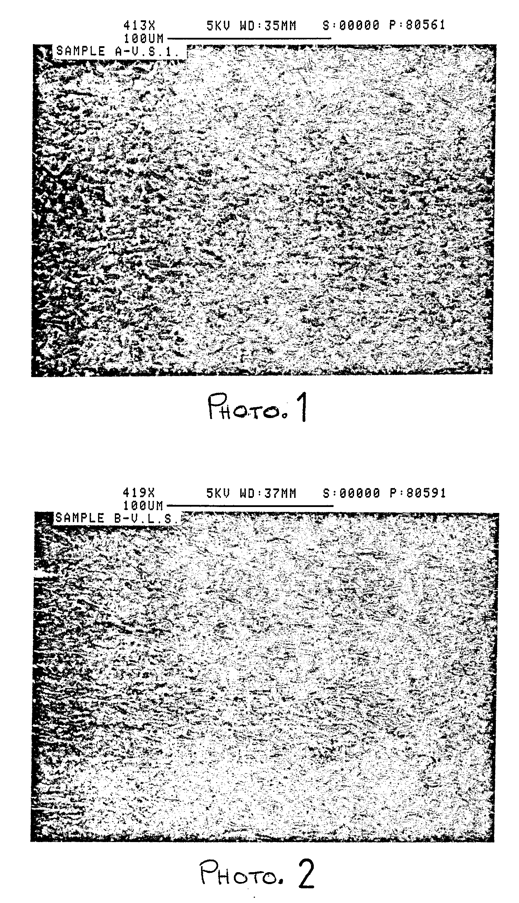

Image analysis was used to determine the degree of alignment achieved by the process. The illustrations shown here represent vertical longitudinal sections. Photograph 1 is typical of the appearance of unrolled material whilst photograph 2 shows the typical appearance of the material which has been rolled. The fibres can be seen to be predominantly aligned along the horizontal axis of the photograph. Figures 3 and 4 are histograms prepared by the image processor and analyser. The X axis contains 9 categories: each represents 10 degrees so that the whole histogram covers hyphae oriented through 180 degrees. Figure 3 represents a microscope field from the material prior to rolling. It contained some 2,700 hyphae. They can be seen to be somewhat randomly oriented, similar numbers falling into all categories. Figure 4 shows a field from the rolled material. In this field of some 2,600 hyphae, there are about 5 times as many hyphae oriented parallel to the long axis as are at right angles to it.

## Claims

1. An apparatus for producing a product from a dough-like fibrous material which comprises;

(1) at least three rollers;

(b) supporting means to support the rollers which are mounted therein essentially horizontally in such a manner that there are at least two upper rollers and at least one lower roller;

(c) rotating means to rotate the rollers in the same direction about their axes;

(d) moving means to move the axes of at least the upper rollers towards and away from each other and thereby to enable material to be supplied to the apparatus from above the upper rollers when the upper rollers are positioned away from each other and to roll the material and thereby to reduce its cross sectional area; and

(e) releasing means to enable product to be released from the apparatus.

2. An apparatus according to claim 1 in which the rotating means and moving means are automatic.

3. An apparatus according to any one of the preceding claims in which the rotating means and releasing means are the same and the product is released by operating the rotating means.

4. An apparatus according to any one of the preceding claims in which the axes of all the rollers are movable.

5. An apparatus according to any one of the preceding claims in which the rollers are cylindrical.

6. An apparatus according to any one of the preceding claims inwhich the rollers are moved inwardly and outwardly using means comprising a fixed plate and a movable plate at each end of the roller system, and having stub shafts at the end of each roller that pass through slots in each plate.

7. An apparatus according to any one of the preceding claims in which the rotating means causes all the rollers to rotate at the same circumferential speed.

8. An apparatus according to any one of the preceding claims in which the rotating means can reverse the direction of the rollers.

9. An apparatus according to any one of the preceding claims in which at least some of the rollers are provided with internal chilling means.

10. An apparatus for producing a product from a dough-like fibrous material which comprises:

(a) at least two upper rollers laterally displaced from one another, and at least one lower roller disposed below and between said upper rollers, each roller having an axis of rotation;

(b) supporting means to support the rollers with said axes essentially horizontal and substantially parallel to one another thereby forming a space between said upper and lower rollers;

(c) rotating means to rotate the rollers in the same direction about said axes;

(d) moving means to move said upper rollers towards and away from each other, between a first position wherein said dough-like material can be introduced between said upper rollers into said space between said upper and lower rollers so that it rests on said lower roller, and a second position wherein said upper and lower rollers grip said dough-like material thereby to roll it; and

(e) releasing means to move said lower roller with respect to said upper rollers to enable the dough-like material, after having been rolled, to be released from said space as the product.

11. A process for producing a product from a dough-like fibrous material which comprises the steps of

(a) supplying at least one piece of material of predetermined size to an apparatus comprising at least three rollers mounted essentially horizontally to include at least two upper and at least one lower rollers;

(b) rolling the piece of material in the apparatus to achieve a predetermined reduction in the cross-sectional area of the piece of the material; and

(c) releasing the elongated piece of material from the apparatus as the product.

12. A process according to claim 11 in which the product is maintained within a temperature within the range -10°C to +15°C.

13. A textured food product produced by a process according to any one of the preceding claims.

*Fig.1.*

EP 0 297 743 A2

# Fig.2.

EP 0 297 743 A2

# Fig.3

HISTORGRAM OF ANGLE AX

# Fig.4

HISTOGRAM OF ANGLE AX

413X          5KV WD:35MM    S:00000 P:80561
100UM ───────
SAMPLE A-V.S.1.

PHOTO. 1

419X          5KV WD:37MM    S:00000 P:80591
100UM ───────
SAMPLE B-V.L.S.

PHOTO. 2